Europäisches Patentamt

European Patent Office

Office européen des brevets

(19)

(11) EP 0 722 225 A2

(12) EUROPÄISCHE PATENTANMELDUNG

(43) Veröffentlichungstag:
17.07.1996   Patentblatt 1996/29

(51) Int Cl.⁶: **H04B 1/66**

(21) Anmeldenummer: 95117924.1

(22) Anmeldetag: 14.11.1995

(84) Benannte Vertragsstaaten:
**DE FR GB IT**

(30) Priorität: **17.11.1994   DE 4441032**

(71) Anmelder: **DEUTSCHE THOMSON-BRANDT GMBH
D-78048 Villingen-Schwenningen (DE)**

(72) Erfinder:
• **Vaupel, Thomas
D-45359 Essen (DE)**

• **Lehmann, Siegfried
D-45219 Essen (DE)**

(74) Vertreter: **Hartnack, Wolfgang, Dipl.-Ing.
Deutsche Thomson-Brandt GmbH
Patentabteilung
Göttinger Chaussee 76
30453 Hannover (DE)**

(54) **Audiosignalkodierung mittels Kurzzeitspektren und einem psychoakustischen Modell**

(57)     In der Speicherungs- und Übertragungstechnik von qualitativ hochwertigen digitalen Audiosignalen gewinnen Verfahren zunehmend an Bedeutung, die eine deutliche Senkung der Datenrate möglichst ohne subjektiven Qualitätsverlust ermöglichen. Die erzielbaren Reduktionsfaktoren sind nur möglich durch Ausnutzung der Eigenschaften des menschlichen Gehörs. Aus kurzen Signal-Abschnitten aus dem Zeitbereich werden Werte im Frequenzbereich gebildet und anschließend codiert, wobei ein psychoakustisches Modell zur Signalanalyse verwendet wird. Das psychoakustische Modell liefert Vorgaben in Form von zulässigen Störenergien, die in bestimmten Spektralbereichen vom Codierer nicht überschritten werden dürfen.

Wird vom Codierer diese maximal zulässige Störung durch die Datenreduktion erzeugt, so können sich nach der Rückführung in den Zeitbereich trotz Einhaltung der Vorgaben des psychoakustischen Modells hörbare Störungen ergeben, und zwar aus der Rückführung des von der Codierung verfälschten Signals vom Kurzzeitspektralbereich in den Zeitbereich. Hierdurch entsteht eine veränderte Störung im Langzeitspektrum, die unter Umständen zu hörbaren Fehlern führt.

Die spektrale Veränderung der vorgegebenen Störung bei der Überführung aus dem Kurzzeitspektralbereich in den Zeitbereich könnte durch eine Ent-Faltung der im Langzeitspektralbereich vorgegebenen Störung mit der Fouriertransformierten der Synthesefensterfunktion berücksichtigt werden. Weil dieser Entfaltungsvorgang jedoch analytisch nicht lösbar ist, werden verschiedene Näherungslösungen verwendet.

Fig.1

**Beschreibung**

Die Erfindung betrifft eine verbesserte Audio-Codierung, bei der die Auswirkungen durch die Anwendung eines psychakustischen Modells bei der Codierung von Kurzzeitspektren auf das Langzeitspektrum berücksichtigt werden.

Stand der Technik

In der Speicherungs- und Übertragungstechnik von qualitativ hochwertigen digitalen Audiosignalen gewinnen Verfahren zunehmend an Bedeutung, welche es ermöglichen, die Datenrate existierender Übertragungsstandards, wie sie durch CD, DAT und DSR gegeben sind, möglichst ohne subjektiven Qualitätsverlust entscheidend zu senken. Verfahren dieser Art werden vielfach als 'Datenreduktions-Verfahren' bezeichnet. Eine wesentliche Grundlage für deren Anwendung und heutige Verbreitung bildet der von der International Standardisation Organisation festgelegte Standard ISO/IEC 11172-3 und der erweiterte Standard ISO/IEC 13818-3, die auch unter den Bezeichnungen ISO/MPEG 1 bzw. ISO/MPEG 2-Standard bekannt sind. In diesen Standards sind drei sogenannte 'Layer' definiert, welche sich durch zunehmende Komplexität und zunehmende Codiereffizienz auszeichnen.

Die Layer I und II basieren auf einem unter dem Namen 'MUSICAM' bekanntgewordenen Verfahren. Layer III verwendet als Grundlage das Verfahren 'ASPEC'.

Die mit solchen Verfahren erzielbaren beachtlichen Reduktionsfaktoren sind nur möglich durch Ausnutzung der Eigenschaften des eigentlichen Empfängers der Übertragungskette, nämlich des menschlichen Gehörs.

Üblicherweise wird eine Transformations-Codierung oder, wie z.B. in Layer II, eine sogenannte Subband-Codierung bei der datenreduzierenden Codierung eingesetzt. Beiden ist gemeinsam, daß jeweils aus kurzen Abschnitten aus dem Zeitbereich Werte im Frequenzbereich gebildet und anschließend codiert werden.

Bei der Transformationscodierung von Audiosignalen "schneidet" man mit Hilfe von Fensterfunktionen fortlaufend Signalblöcke, die jeweils aus einer Gruppe von aufeianderfolgenden Abtastwerten bestehen, aus einem Audiosignal aus. Im Fall der Transformationscodierung in ihrer klassischen Form handelt es sich bei den Blöcken um unmittelbar aneinandergrenzende Zeitabschnitte des Audiosignals. Im Falle modernerer Ausführungsformen der Transformationscodierung können sich benachbarte Blöcke auch überlappen, wie z.B. bei der TDAC-Transformation (Time Domain Aliasing Cancellation).

Die einzelnen Blöcke werden nach dem Ausschneidevorgang (Fensterungsvorgang) einer Transformation mit Basisfunktionen bzw. Basisvektoren unterzogen, deren Dauer bzw. Länge auf die Blockdauer begrenzt ist.

Das sich auf diese Weise ergebende Spektrum sei im folgenden wegen der begrenzten Basisfunktionendauer als "Kurzzeitspektrum" bezeichnet.

Von diesem Kurzzeitspektrum zu unterscheiden ist das "Fourier-Spektrum" eines Signalblocks. Der Fourier-Transformation liegen unendlich ausgedehnte harmonische Funktionen zugrunde. Das Fourierspektrum des Signalblocks ergibt sich durch die Faltung des Fourier-Spektrums des zu codierenden Audiosignals mit dem Fourier-Spektrum der zum Ausschneiden des Signalblocks verwendeten Fensterfunktion.

Weil der Fourier-Transformation unendlich ausgedehnte Funktionen zugrunde liegen, sei das Fourier-Spektrum zur Unterscheidung vom Kurzzeitspektrum im folgenden als "Langzeitspektrum" bezeichnet.

Erfindung

Alle bekannten Datenreduktionsverfahren für digitale Audiosignale, die eine Signaldarstellung im Kurzzeitspektralbereich benutzen, verwenden folgende prinzipielle Verarbeitungsreihenfolge:

- Überführung der Signaldarstellung vom Zeitbereich in den Kurzzeitspektralbereich;
- Codierung und Übertragung des Signals im Kurzzeitspektralbereich;
- Rückführung der Signaldarstellung vom Kurzzeitspektralbereich in den Zeitbereich bei der Decodierung.

Bei der Codierung des Audiosignals im Kurzzeitspektralbereich werden bestimmte Eigenschaften des menschlichen Gehörsinns ausgenutzt, um eine Datenreduktion durchzuführen. Vielfach geschieht dies, indem ein sogenanntes "psychoakustisches Modell" zur Signalanalyse verwendet wird. Hierbei liefert das psychoakustische Modell Vorgaben in Form von zulässigen Störenergien, die in bestimmten Spektralbereichen vom verwendeten Codierer nicht überschritten werden dürfen.

Wird vom Codierer diese maximal zulässige Störung durch die Datenreduktion erzeugt, so können sich nach der Rückführung in den Zeitbereich trotz Einhaltung der Vorgaben des psychoakustischen Modells hörbare Störungen ergeben. Diese hörbaren Störungen resultieren aus der Rückführung des von der Codierung verfälschten Signals vom Kurzzeitspektralbereich in den Zeitbereich. Es entsteht aus der im Kurzzeitspektrum eingeführten Störung durch die Rückführung in den Zeitbereich eine veränderte Störung im Langzeitspektrum, die unter Umständen zu hörbaren Fehlern führt.

Die Veränderung des Störspektrums läßt sich am Beispiel einer Transformationscodierung verdeutlichen. Das vom psychoakustischen Modell vorgegebene Störspektrum wird vom Codierer im Kurzzeitspektralbereich eingeführt. Danach werden das Signal und die Störung in den Zeitbereich zurücktransformiert und anschließend mit einer Synthesefensterfunktion gewichtet. Die Wichtung des rücktransformierten Signals mit einer Fensterfunktion bedeutet, bezogen auf das Langzeitspektrum des Signals, eine Faltung mit der Fouriertransformierten der Fensterfunktion. Damit ergibt sich eine spektrale Ausweitung des vorgegebenen Störsignals, die in bestimmten Frequenzbereichen zu hörbaren Fehlern führen kann, wenn diese spektrale Ausweitung nicht vom verwendeten Modell mitberücksichtigt wird.

Der Erfindung liegt die Aufgabe zugrunde, die spektrale Veränderung der vorgegebenen Störung, bedingt durch die Überführung aus dem Kurzzeitspektralbereich in den Zeitbereich, im Kurzzeitspektralbereich mitzuberücksichtigen. Diese Aufgabe wird durch das in Anspruch 1 angegebene Verfahren gelöst.

Der Erfindung liegt die weitere Aufgabe zugrunde, eine Vorrichtung zur Anwendung des erfindungsgemäßen Verfahrens anzugeben. Diese Aufgabe wird durch die in Anspruch 3 angegebene Vorrichtung gelöst.

Für die Realisation eines psychoakustischen Modells werden im informativen Teil der ISO/MPEG-Standards zwei Vorschläge gemacht. Da diese ISO/MPEG-Standards lediglich das Datenstrom-Format in der Speicherungs- und Übertragungsebene festlegen, haben diese Vorschläge keinen bindenden Charakter.

Vorteilhaft kann durch Verbesserung des psychoakustischen Modells die Leistungsfähigkeit des Encoders gesteigert werden, ohne daß dabei das Datenstrom-Format verletzt wird. Daher wird keine Änderung des Decoders notwendig. Die beispielsweise in den ISO/MPEG-Standards benutzten psychoakustischen Modelle basieren auf Erkenntnissen aus der Pychoakustik. Dabei ist eine Signalbeschreibung im Langzeitspektralbereich die Grundlage der Abschätzung des gerade nicht wahrnehmbaren Störsignals. Um den oben beschriebenen Effekt der spektralen Ausweitung des Störsignals mit zu berücksichtigen, wird beispielsweise im Layer III der ISO/MPEG-Standards im unteren Frequenzbereich bis ca. 600 Hz immer ein minimaler Störabstand zwischen 18 und 24 dB eingehalten, unabhängig von den Eigenschaften des zu übertragenden Signals.

Diese pauschale Vergrößerung des Störabstandes führt zu einer ungünstigeren Datenrate gegenüber dem Fall einer adaptiven Anpassung des Störabstandes an die Signalgegebenheiten.

Eine Möglichkeit, die Berücksichtigung der spektralen Veränderung der vorgegebenen Störung bei der Überführung aus dem Kurzzeitspektralbereich in den Zeitbereich vorzunehmen, besteht darin, daß eine Ent-Faltung der im Langzeitspektralbereich vorgegebenen Störung mit der Fouriertransformierten der Synthesefensterfunktion durchgeführt wird. Dieser Entfaltungsvorgang ist im vorliegenden Fall jedoch analytisch nicht lösbar. Deshalb werden verschiedene Näherungslösungen zur Problemlösung eingesetzt.

Im folgenden soll davon ausgegangen werden, daß das angenommene Kurzzeitspektrum in Form eines Spektralvektors mit M Spektralvektorkomponenten $y_m$ vorliegt. Weiterhin sollen die Störungen, die im weiteren Verlauf der Erfindungsbeschreibung verwendet werden, durch Störenergien in bestimmten Bereichen des Kurzzeitspektrums beschrieben sein. Für einen Spektralbereich i existiert zum einen eine Störenergie $E_{C,i}$, die durch die Codierung in Folge einer bestimmten Quantisierung der entsprechenden Spektralkomponenten $y_m$ dieses Frequenzbereiches eingeführt werden soll, und es existiert zum anderen eine Störenergie $E_{V,i}$, die nach der Vorgabe des psychoakustischen Modells für diesen Spektralbereich i maximal zulässig ist. Es wird unterstellt, daß N Spektralbereiche mit dem Laufindex i vorliegen, die jeweils entsprechend dem verwendeten Codungsverfahren gleiche oder unterschiedliche Ausdehnungen haben. Das heißt, jeder Spektralbereich i enthält entweder die gleiche Anzahl oder eine unterschiedliche Anzahl von Spektralvektorkomponenten $y_m$.

Es soll davon ausgegangen werden, daß es sich bei den verwendeten Störgrößen der einzelnen Spektralbereiche i jeweils um im statistischen Sinne unabhängige Größen handelt. Damit lassen sich bei einer Überlagerung von Störungen aus verschiedenen Spektralbereichen i die jeweiligen Störenergien addieren.

Das Verfahren zur Berücksichtigung der spektralen Veränderung der Störung, bedingt durch die Überführung aus dem Kurzzeitspektralbereich in den Zeitbereich, bezieht sich lediglich auf die oben beschriebenen Energiegrößen und nicht auf die einzelnen Spektralvektorkomponenenten $y_m$. Als Vorgaben benutzt die Erfindung den Verlauf der maximal zulässigen Störenergie im Langzeitspektrum, gegeben durch die Werte $E_{V,i}$, die beispielsweise mit Hilfe eines psychoakustischen Modells ermittelt worden sind, sowie einen Störenergieverlauf, gegebenen durch die Werte $E_{C,i}$ im Kurzzeitspektrum, der die Vorgaben im Langzeitspektrum einhalten soll. Dieser Verlauf im Kurzzeitspektrum kann beispielsweise der zu erwartende Verlauf der Störung sein, der durch eine Codierung von Kurzzeitspektralwerten auftritt. Das Verfahren soll eine Korrekturgröße für den vorgegebenen Verlauf im Kurzzeitspektralbereich liefern, damit die Vorgaben im Langzeitspektralbereich eingehalten werden.

Eine analytische Lösung dieses Problems führt zu Korrekturwerten, die in vielen Fällen negative Energiewerte als zulässige Störung im Kurzzeitspektrum zur Folge haben. Dieses physikalisch nicht sinnvolle Ergebnis soll mit der Erfindung vermieden werden.

Im Prinzip dient das erfindungsgemäße Verfahren zur Codierung von Audiosignalen mittels Kurzzeitspektren und einem psychoakustischen Modell, wobei in dem psychoakustischen Modell die Auswirkungen einer Überführung vom Kurzzeitspektralbereich in den Langzeitspektralbereich auf im Kurzzeitspektralbereich vorgegebene Energieverläufe berücksichtigt werden und die nachfolgende Codierung entsprechend beeinflussen.

Vorteilhafte Weiterbildungen des erfindungsgemäßen Verfahrens ergeben sich aus dem zugehörigen abhängigen Anspruch.

Im Prinzip ist die erfindungsgemäße Vorrichtung zur Codierung von Audiosignalen mittels Kurzzeitspektren und einem psychoakustischen Modell, versehen mit:

- Mitteln zur Bildung von Kurzzeitspektren aus den Audiosignalen;
- Mitteln zur Analyse der Audiosignale nach einem psychoakustischen Modell, die die Auswirkungen einer Überführung vom Kurzzeitspektralbereich in den Langzeitspektralbereich auf im Kurzzeitspektralbereich vorgegebene Energieverläufe berücksichtigen;
- Mitteln zur Quantisierung und Codierung der Kurzzeitspektren mit Hilfe von Ausgangssignalen aus den Analysemitteln.

Vorteilhafte Weiterbildungen der erfindungsgemäßen Vorrichtung ergeben sich aus demn zugehörigen abhängigen Anspruch.

Zeichnungen

Anhand der Zeichnungen sind Ausführungs-Beispiele der Erfindung beschrieben. Diese zeigen in:

Fig. 1    Störpegelwerte mit Schleppkurven zur Darstellung der Störenergien;
Fig. 2    erste Ausführungsform zur Abschätzung der Auswirkungen der Überführung des Kurzzeitspektrums in das Langzeitspektrum;
Fig. 3    dritte Ausführungsform zur Abschätzung der Auswirkungen der Überführung des Kurzzeitspektrums in das Langzeitspektrum;
Fig. 4    erste Ausführungsform zur Berechnung der zulässigen Störung im Kurzzeitspektralbereich;
Fig. 5    Blockschaltbild eines gehörangepaßten Audio-Codecs.

Ausführungs-Beispiele

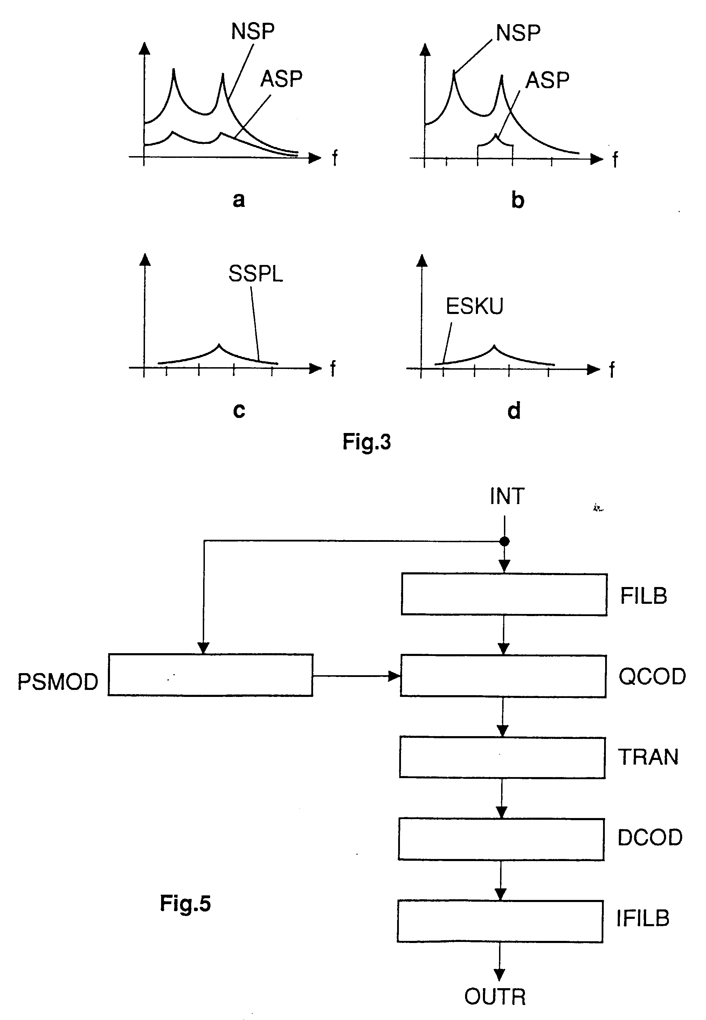

In Fig. 5 wird in der Filterbank bzw. Transformation FILB eine spektrale Zerlegung des zu codierenden Audiosignals INT vorgenommen. Diese ermöglicht zum einen eine Reduktion der im Audiosignal enthaltenen Redundanz. Zum anderen kann eine Reduktion der für den Empfänger irrelevanten Signalanteile vorgenommen werden, in dem durch adaptive Steuerung der Quantisierer in den einzelnen Bandpaßkanälen das Quantisierungsrauschen zeitlich und spektral so geformt wird, daß es unterhalb der aktuellen Mithörschwelle des Audiosignals liegt. Die Berechnung der aktuellen Mithörschwelle erfolgt in dem Funktionsblock 'Psychoakustisches Modell' PSMOD aus dem Signal INT. Für die Berechnung dieses psychoakustischen Modells können die im informativen Teil der ISO/MPEG-Standards beschriebenen Modelle PAM I und PAM II oder andere bekannte Modelle verwendet werden. Die Quantisierung und Codierung der Ausgangssignale von FILB erfolgt im Block QCOD unter Berücksichtigung der Ergebnisse im Block PSMOD.

Die codierten Signale können mit einem Fehlerschutz versehen werden. Es kann ebenfalls eine Verschlüsselung und/oder eine Kombination mit anderen Daten, z.B. Videosignalen, stattfinden.

Der Block TRAN repräsentiert z.B. eine terrestrische oder eine Kabel- oder eine Satelliten-Übertragunsstrecke. TRAN kann auch ein Speichermedium wie z.B. eine optische Platte (CD, Minidisc), ein Magnetband (DCC) oder einen Festkörperspeicher (RAM) darstellen. TRAN kann eine entsprechende Kanalcodierung einschließen.

In einem Empfänger bzw. Wiedergabeteil kann die entsprechende Decodierung/Entschlüsselung/Demultiplexierung in Block DCOD erfolgen, wobei sich eine entsprechend inverse Filterbank bzw. Transformation IFILB anschließt, die das decodierte Audiosignal OUTR im Zeitbereich ausgibt.

Bei der nachfolgenden Beschreibung soll die Erfindung in zwei Teilbereiche gegliedert werden, nämlich:

A. einen Teil, der die Auswirkungen der Überführung des Kurzzeitspektrums in das Langzeitspektrum für die einzelnen Komponenten der Störenergien $E_{C,i}$ abschätzt;
B. einen Teil, der die zulässige Störung im Kurzzeitspektralbereich aus den Auswirkungen der Überführung des Kurzzeitspektrums in das Langzeitspektrum berechnet.

Für die zwei Teilbereiche werden jeweils verschiedene Ausführungsformen angegebenen. Vorteilhaft lassen sich alle Ausführungsformen des Teils A mit allen Ausführungsformen des Teils B kombinieren.

Teil A, 1. Ausführungsform:

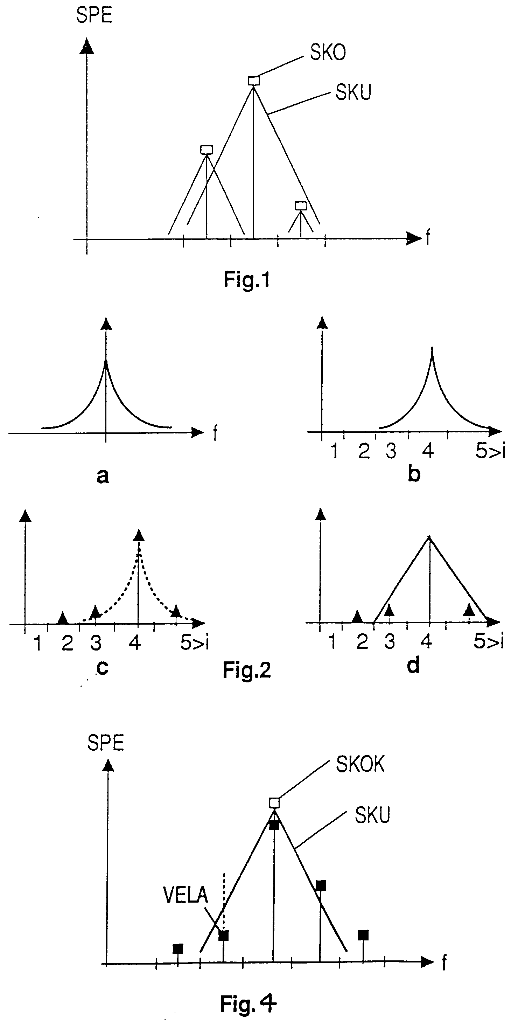

Die Auswirkungen, die durch eine Überführung der im Kurzzeitspektralbereich vorgegebenen Störung in den Langzeitspektralbereich entstehen, können im einfachsten Fall näherungsweise als "Verschmierung" der Störenergien $E_{C,i}$ eines Spektralbereiches i in benachbarte Spektralbereiche angesehen werden. Hierbei können vereinfachend die Störenergien, die durch die Verschmierung entstehen, dadurch ermittelt werden, daß bei der Darstellung der Störenergien als Störpegel (in dB) an jedem Störpegelwert i eines Spektralbereiches, wie in Fig. 1 dargestellt, eine Schleppkurve SKU in Form einer Geraden zu kleineren und eine zu größeren Frequenzen hin aufgehängt wird. Der Aufhängepunkt kann hierbei der Pegelwert der Störkomponente SKO ($E_{C,i}$) selbst sein oder ein entsprechend der Energieverschmierung verringerter Pegelwert. Hierbei können für jede Komponente $E_{C,i}$ verschiedene Schleppkurvenverläufe verwendet werden. SPE ist der Störpegel in dB.

Die Steigung der verwendeten Geraden und der Pegelwert des Aufhängepunktes der Geradenverläufe hängen ab von der bei dem Codierungsverfahren benutzten Fensterfunktion im Falle der Verwendung einer Transformationscodierung oder den Eigenschaften der verwendeten Prototypfilter im Falle der Verwendung einer Subbandcodierung. Bezogen auf die Transformationscodierung lassen sich die Geradenverläufe beispielsweise dadurch ermitteln, daß:

1. der Betragsverlauf der Fouriertransformierten der verwendeten Synthesefensterfunktion berechnet wird (Fig. 2a);

2. dieser Verlauf durch einen Modulationsvorgang jeweils in die Bandmitte eines Spektralbereichs i, der den Energiewerten zugrunde liegt, umgesetzt wird (Fig. 2b);

3. aus diesem so umgesetzten Betragsverlauf die in die jeweiligen Spektralbereiche entfallenen Energiewerte dieses Verlaufes berechnet werden (Fig. 2c);

4. die so entstandenen Energieverläufe des Synthesefensters für den jeweiligen Bereich i zur Vereinfachung durch Geradenverläufe in einer logarithmischen Wertskalierung und vorzugsweise in einer linearen Frequenzskalierung angenähert werden (Fig. 2d).

Teil A, 2. Ausführungsform:

Die Auswirkungen, die durch eine Überführung der im Kurzzeitspektralbereich vorgegebenen Störung in den Langzeitspektralbereich entstehen, sollen wie auch bei der 1. Ausführungsform durch eine Schleppkurve Berücksichtigung finden, die jeweils an dem Pegelwert einer Störenergiekomponente $E_{C,i}$ aufgehängt wird. Die für die jeweilige Störenergiekomponente $E_{C,i}$ zu verwendende Schleppkurve wird über ein Testverfahren ermittelt. Bei diesem Testverfahren wird wie folgt vorgegangen:

1. Es werden verschiedene Verläufe von Störspektren unterstellt, die bei dem verwendeten Codierungsverfahren erwartet werden, wenn Spektralvektorkomponenten $y_m$, die in den Spektralbereich mit dem Index i fallen, einer Codierung unterzogen werden.

2. In einem Testlauf wird ein ausgewählter Verlauf eines Störspektrums einer entsprechenden Überführung vom Kurzzeitspektralbereich in den Langzeitspektralbereich unterzogen.

3. Die sich für den jeweiligen Testlauf mit einem vorgegebenen Störsignal ergebende Verschmierung der Energie aus dem Bereich i in benachbarte Frequenzbereiche j wird in Form einer Schleppkurve mit einem Aufhängepunkt am Spektralbereich i festgehalten. Jeder Punkt der Schleppkurve entspricht der Energie eines Frequenzbandes, welches symmetrisch zu diesem Punkt angeordnet ist. Die Breite des Frequenzbandes ergibt sich als Funktion aus der verwendeten Bandaufteilung des Codierungsverfahrens, in dem zwischen den Bandbreiten benachbarter Spektralbereiche i interpoliert wird, beispielsweise durch lineare Interpolation.

4. Die anzuwendende Verschleppungskurve für den Frequenzindex i ergibt sich durch Auswertung aller Testläufe mit den verschiedenen Störspektren bezüglich des Spektralbereiches i aus einer Mittelung aller gewonnenen Verschleppungskurven, die für die vorgegebenen Störsignale gefunden wurden.

5. Der Mittelungsvorgang über verschiedene vorgegebene Störspektren wird für jeden Spektralbereich i durchgeführt und ergibt jeweils eine individuelle Kurve für diesen Spektralbereich.

Teil A, 3. Ausführungsform:

1. Für jedes einzelne zu übertragende Kurzzeitspektrum (Nutzspektrum NSP) wird der individuelle Verlauf der Störung im Kurzzeitspektrum (Störspektrum SSP) ermittelt wie in Fig. 3a dargestellt.

2. Dieser Störverlauf beschreibt die Störung in Form von M Spektralvektorkomponenten entsprechend den M Spektralvektorkomponenten des zu übertragenden Spektralvektors. Die in die jeweiligen Spektralbereiche i fallenden Komponenten (Anteil ASP des Störspektrums im Bereich i) der Störung werden zusammengefaßt und vom Kurzzeitspektrum in das Langzeitspektrum (Störspektrum SSPL im Bereich i) überführt wie in Fig. 3b und Fig. 3c dargestellt.

3. Die sich aufgrund dieser Überführung ergebende Verschmierung von Energien in benachbarte Frequenzbereiche wird ermittelt und in Form einer Schleppkurve für den Spektralbereich i festgehalten (Energieschleppkurve ESKU für die Störkomponente i) wie in Fig. 3d dargestellt. Jeder Punkt der Schleppkurve entspricht der Energie eines Frequenzbandes gemäß der Vorgehensweise in der 2. Ausführungsform. Eine entsprechende Schleppkurve wird für alle Spektralbereiche i nach diesem Verfahren ermittelt. Dieses Verfahren wird für jeden zu übertragenden Transformationsblock angewendet, um die zu verwendenden Schleppkurven an den individuellen Verlauf der Störung anzupassen. Somit ist für jedes zu übertragende Kurzzeitspektrum für jeden Spektralbereich i eine neue Schleppkurve zu berechnen.

Teil B, 1. Ausführungsform:

Eine mögliche Näherung für die gesuchte Korrekturgröße ergibt sich durch folgendes Verfahren:

1. Die Schleppkurve für die Störkomponente $E_{C,i}$ im Kurzzeitspektrum wird am Pegelwert der Komponente $E_{C,i}$ aufgehängt, z.B. wiederum am Pegelwert der Komponente selbst oder an einer entsprechend verkleinerten Größe.
2. Wird festgestellt, daß am Ort j (der Ort j liegt vorzugsweise in der Bandmitte des Spektralbereiches mit dem Index j) die durch die Verschleppung hervorgerufene Störung größer ist, als die dort zugelassene Störung im Langzeitspektrum in Form der zulässigen Störkomponente $E_{V,j}$ im Langzeitspektrum, so muß die Störkomponente $E_{C,i}$ im Kurzzeitspektrum gerade so verkleinert werden, daß ihre Auswirkung am Ort j mindestens so klein ist wie die dort zugelassene Störung $E_{V,j}$ des Langzeitspektrums wie in Fig. 4 dargestellt. SPE ist der Störpegel in dB, SKOK ist die Störkomponente $E_{C,i}$ im Kurzzeitspektrum, SKU ist die Schleppkurve und VELA ist die Vorgabe $E_{V,j}$ im Langzeitspektrum.
3. Dieses Verfahren muß für alle Komponenten i im Kurzzeitspektralbereich und j im Langzeitspektralbereich der vorgegebenen Störverläufe durchgeführt werden.

Es ergibt sich ein maximal zulässiger Störleistungsverlauf, der, bezogen auf die aufzuwendende Datenrate, günstigere Werte liefert, als eine pauschale Absenkung der zulässigen Störung in bestimmten Frequenzbereichen. Bezüglich der Hörbarkeit des entstehenden Fehlersignals stellt diese einfache Vorgehensweise jedoch nicht immer die optimale Lösung dar.

Teil B, 2. Ausführungsform:

Eine andere Näherung für die gesuchte Korrekturgröße ergibt sich durch folgendes Verfahren:

1. Die Schleppkurven für die Störkomponenten $E_{C,i}$ des Kurzzeitspektrums werden jeweils am Pegelwert der Komponenten $E_{C,i}$ aufgehängt (siehe auch Teil B, 1. Ausführungsform).
2. Die Auswirkungen aller Schleppkurven werden für jede Stelle j aufsummiert. Dies läßt sich beispielsweise dadurch realisieren, daß alle Abtastwerte an den Stellen j einer Schleppkurve für die Komponente i des Kurzzeitspektrums als Zeileneintrag j in der i-ten Spalte einer Matrix $\vec{D}$ dienen. Werden alle im Kurzzeitspektralbereich vorgegebenen Störkomponenten $E_{C,i}$ in einen Spaltenvektor $\vec{E}_C$ eingetragen, so ergibt sich die Aufsummation aller Schleppkurven in Form eines Vektor $\vec{E}_S$ über folgende Gleichung:

$$\vec{E}_S \; = \; \vec{D} \, \cdot \, \vec{E}_C \qquad\qquad (1)$$

3. Aus der berechneten Größe $\vec{E}_S$ läßt sich über zwei Verfahren die gesuchte Korrektur der Störenergien im Kurzzeitspektrum $\vec{E}_C$ entnehmen:

a) Durch einen Vergleich von $\vec{E}_S$ mit dem vorgegebenen Verlauf der maximal zulässigen Störung im Langzeitspektralbereich in Form der Werte $E_V$ läßt sich die maximale Vergrößerung der Störung gegenüber der Vorgabe im Langzeitspektralbereich bestimmen. Werden alle Komponenten i der im Kurzzeitspektralbereich vorgegebene Störung $\vec{E}_C$ um den Betrag dieser maximalen Vergrößerung verkleinert, so erhält man eine Störung im Kurzzeitspektralbereich, die nach der Rückführung in den Langzeitspektralbereich in jedem Punkt unterhalb der Vorgaben liegt.

b) Verbessern hinsichtlich des aufzuwendenden Bitbedarfes läßt sich dieses Verfahren, indem nicht der gesamte Vektor $\vec{E}_C$ um den maximalen Betrag abgesenkt wird, sondern folgende Vorgehensweise gewählt wird:

1) Der maximale Betrag der Vergrößerung der Störenergie in $\vec{E}_S$ gegenüber der Vorgabe im Langzeit-

spektralbereich $\vec{E}_V$ wird in dem Bereich gesucht, der der Ausdehnung der jeweils in dem untersuchten Spektralbereich i verwendeten Schleppkurve oberhalb der eines vorgegebenen Pegelverlaufs, vorzugsweise der absoluten Hörschwelle, entspricht.

2) Um den nach 1) ermittelten maximalen Betrag der Vergrößerung wird dann nur die Komponente i aus $\vec{E}_C$, für die der Untersuchungsbereich nach 1) gilt, verkleinert.

Teil B, 3. Ausführungsform:

Die Korrektur der zulässigen Störung im Kurzzeitspektralbereich soll hinsichtlich der aufzuwendenden Datenrate optimiert werden. Hierzu wird folgendes Verfahren angewendet:

1. Die Korrekturgröße wird als Pegeländerung (in dB) berechnet.
2. Hierzu wird für jede Komponente $E_{C,i}$ ein Korrekturpegel $\Delta k_{j,i}$ (lies: erforderliche Korrektur der Komponente $E_{C,i}$ aufgrund der Auswirkung im Spektralbereich j) ermittelt, so daß die sich ergebende Störung im Langzeitspektralbereich an der Stelle j gerade den Vorgaben entspricht. Die ermittelten Korrekturpegel werden in eine Tabelle eingetragen, deren Spalten den zu korrigierenden Komponenten i entsprechen und deren Zeilen j den untersuchten Stellen j der Vorgabe im Langzeitspektralbereich zugeordnet sind.
3. Die Korrekturpegelwerte in der Tabelle werden ermittelt, indem an dem Pegelwert der Komponente $E_{C,i}$ im Kurzzeitspektrum die ihr zugeordnete Schleppkurve aufgehängt wird (siehe Teil B, 1. Ausführungsform) .
4. Es wird die Pegeldifferenz $\Delta e_{j,i}$ gegenüber dem Vorgabewert $E_{V,j}$ an der Stelle j des Langzeitspektrums berechnet.
5. Es läßt sich zeigen, daß sich der Korrekturpegelwert (in dB) für die Komponente $E_{C,i}$ des Kurzzeitspektrums durch die Gleichung

$$\Delta k_{j,i} = \Delta e_{j,i} + \frac{\sum\limits_{k=1}^{N} b_k}{b_i} \tag{2}$$

berechnen läßt. Hierbei geben die Werte $b_i$ die jeweilige Breite des Spektralbereiches i an und N die Anzahl der insgesamt vorhandenen Störenergiekomponenten.
6. Um eine korrigierte zulässige Störung im Kurzzeitspektralbereich zu erzeugen, wird entweder

a) jeder Spalte i der maximale Korrekturwert für die Korrektur der Komponente $E_{C,1}$ des Kurzzeitspektrums entnommen oder
b) ein Auswahlverfahren benutzt, daß alle Kombinationen von Korrekturpegelwerten $\Delta k_{j,i}$ zu einer Überprüfung heranzieht. Bei dieser Überprüfung wird der Störverlauf im Kurzzeitspektralbereich mit der jeweils ausgesuchten Kombination von Korrekturpegelwerten versehen und anschließend mittels Gleichung (1) oder einer entsprechenden Transformation in den Langzeitspektralbereich überführt. Es wird anschließend überprüft, welche Kombination unterhalb der Vorgaben im Langzeitspektralbereich liegt und gleichzeitig die Vorgabe mit dem kleinsten Fehler annähert.

Die erfindungsgemäß codierten Signale können in der üblichen Weise auf bekannte Aufzeichnungsträger, insbesondere optische oder magnetische Datenträger, aufgezeichnet sein und in einem Decoder oder Abspielgerät entsprechend decodiert und wiedergegeben werden.

Als Datenträger kommt beispielsweise eine CD, eine DVD, eine Diskette oder eine Magnetband-Kassette in Betracht. Die Aufzeichnung kann bei der Herstellung des Aufzeichnungsträgers erfolgen oder durch einen Benutzer ausgelöst in einem Recorder.

**Patentansprüche**

1. Verfahren zur Codierung von Audiosignalen (INT) mittels Kurzzeitspektren und einem psychoakustischen Modell (PSMOD), **dadurch gekennzeichnet**, daß in dem psychoakustischen Modell die Auswirkungen einer Überführung vom Kurzzeitspektralbereich (NSP) in den Langzeitspektralbereich auf im Kurzzeitspektralbereich vorgegebene Energieverläufe (SSP) berücksichtigt werden und die nachfolgende Codierung (FILB, PSMOD, QCOD) entsprechend beeinflussen.

2. Verfahren nach Anspruch 1, **dadurch gekennzeichnet**, daß in dem psychakustischen Modell zunächst die Auswirkungen der Überführung des Kurzzeitspektrums in das Langzeitspektrum für die einzelnen Komponenten der Störenergien ($E_{C,i}$) abgeschätzt werden und anschließend die zulässige Störung im Kurzzeitspektralbereich aus den Auswirkungen der Überführung des Kurzzeitspektrums in das Langzeitspektrum berechnet wird.

3. Vorrichtung für ein Verfahren nach Anspruch 1 oder 2 zur Codierung von Audiosignalen (INT) mittels Kurzzeitspektren und einem psychoakustischen Modell (PSMOD), versehen mit:

   - Mitteln (FILB) zur Bildung von Kurzzeitspektren aus den Audiosignalen;
   - Mitteln (PSMOD) zur Analyse der Audiosignale nach einem psychoakustischen Modell, die die Auswirkungen einer Überführung vom Kurzzeitspektralbereich (NSP) in den Langzeitspektralbereich auf im Kurzzeitspektralbereich vorgegebene Energieverläufe (SSP) berücksichtigen;
   - Mitteln (QCOD) zur Quantisierung und Codierung der Kurzzeitspektren mit Hilfe von Ausgangssignalen aus den Analysemitteln.

4. Vorrichtung nach Anspruch 3, **dadurch gekennzeichnet**, daß die Vorrichtung zusätzlich enthält:

   - Mittel zur Decodierung (DCOD) der codierten und übertragenen oder gespeicherten Audiosignale;
   - Mittel zur Überführung (IFILB) der Ausgangssignale der Decodiermittel in den Zeitbereich.

5. Aufzeichnungsträger, insbesondere optischer oder magnetischer Datenträger, der ein mit einem Verfahren nach Anspruch 1 oder 2 codiertes Signal enthält.

Fig.1

a

b

c

Fig.2

d

Fig.4

**Fig.3**

**Fig.5**